# FASCICULE DE BREVET EUROPEEN

(11) **EP 2 218 203 B1**
(45) Date de publication et mention de la délivrance du brevet: **24.02.2021**
(21) Numéro de dépôt: 08856380.4
(22) Date de dépôt: 04.12.2008
(51) Int. Cl.: H04L 1/00, H04L 29/06

(54) **PROCEDE ET DISPOSITIF DE TRANSMISSION ROBUSTE D'EN-TETES RESEAU COMPRESSES**
VERFAHREN UND EINRICHTUNG ZUR ZUVERLÄSSIGEN ÜBERTRAGUNG VON KOMPRIMIERTEN NETZWERK-HEADERN
METHOD AND DEVICE FOR THE RELIABLE TRANSMISSION OF COMPRESSED NETWORK HEADERS

(30) Priorité: 07.12.2007 FR 0708544
(43) Date de publication de la demande: 18.08.2010
(73) Titulaire: THALES, 92400 Courbevoie (FR)
(72) Inventeur: LAMY-BERGOT, Catherine, F-75019 Paris (FR); HAMMES, Pierre, F-92400 Courbevoie (FR)
(74) Mandataire: Marks & Clerk France
(86) Numéro de dépôt international: PCT/EP2008/066836
(87) Numéro de publication internationale: WO 2009/071644

(56) Documents cités:
- EP-A- 1 533 930
- EP-A1- 1 710 942
- WO-A2-00/69139
- US-B1- 6 882 637

## Description

L'invention concerne un procédé et un dispositif permettant de protéger des données contre les erreurs, dans un système de transmission.

Elle est utilisée notamment dans la transmission de données multimédia. Elle s'applique aussi dans la transmission de données par paquets ayant un en-tête compressé.

Dans le domaine des transmissions de données, ces dernières peuvent être entachées d'erreurs dues au canal de transmission lui-même. La transmission dans les canaux sans fils, comme par exemple l'usage de l'UMTS (Universal Mobile Telcommunication System), la technologie WiFi, ou encore WiMAX, ou les solutions employées sur les canaux Haute fréquence (HF) ... engendre des erreurs qui peuvent venir perturber le décodage des données à la réception.

Pour combattre le risque que ces erreurs perturbent la transmission, il est connu de l'Homme du métier d'utiliser des solutions de type retransmission des données, par exemple, la technique de retransmission de données automatique plus connue sous l'abréviation anglo-saxonne ARQ (Automatic Request), ou sa déclinaison hybrid-ARQ. Ces solutions sont en général appliquées au niveau réseau.

Il existe aussi des solutions reposant sur l'introduction de redondance (FEC : Forward Error Correction) au niveau accès radio, c'est-à-dire au niveau de la couche physique du système de transmission directement.

Il est aussi connu d'employer des en-têtes compressés standard avec un codage correcteur d'erreur plus important au niveau de la couche physique ou l'utilisation de retransmissions.

L'inconvénient principal des solutions présentes dans l'état de l'art est, qu'en général, la protection se porte au niveau de l'ensemble en-tête et données, sans différenciation et avec suppression du paquet en cas de corruption, alors que l'on pourrait souhaiter recevoir des charges utiles partiellement corrompues si, leur en-tête reste, elle, correcte.

Un inconvénient supplémentaire aux techniques de retransmission est qu'elles supposent la présence d'un lien duplex, ce qui n'est pas toujours possible, notamment dans le cas des applications de diffusion.

Un autre inconvénient des techniques de l'art antérieur est qu'elles engendrent un fort niveau de redondance au niveau physique, sous la couche réseau. Ceci peut entraîner d'une part, une incompatibilité avec le standard utilisé (s'il n'a pas prévu un tel niveau de protection, ou l'emploi des codes que l'on souhaite employer) et d'autre part, amène en général à augmenter le niveau de protection sur l'ensemble du paquet de manière indifférencié ce qui se révèle plus coûteux en terme de bande passante.

On connait par ailleurs les techniques décrites dans les brevets et demandes de brevets US 6882637, WO00/69139 et EP 1710942.

L'idée de l'invention repose sur une nouvelle approche qui consiste notamment à protéger l'en-tête du paquet à transmettre sans que cela implique de protéger également les données utiles en cas de fonctionnement normal de la transmission de données.

L'objet concerne un procédé de transmission de données selon la revendication 1.

L'object concerne aussi un système selon la revendication 6.

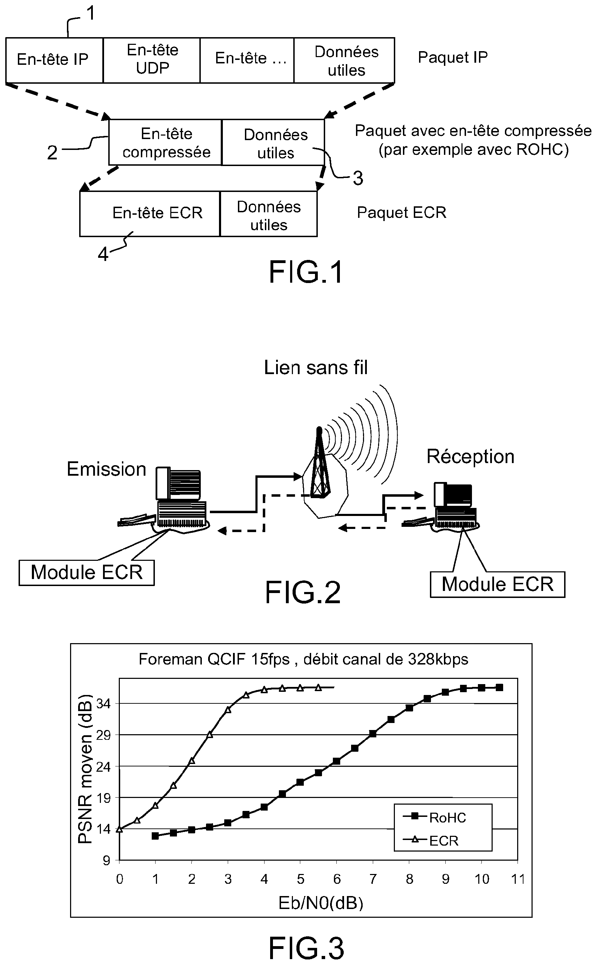

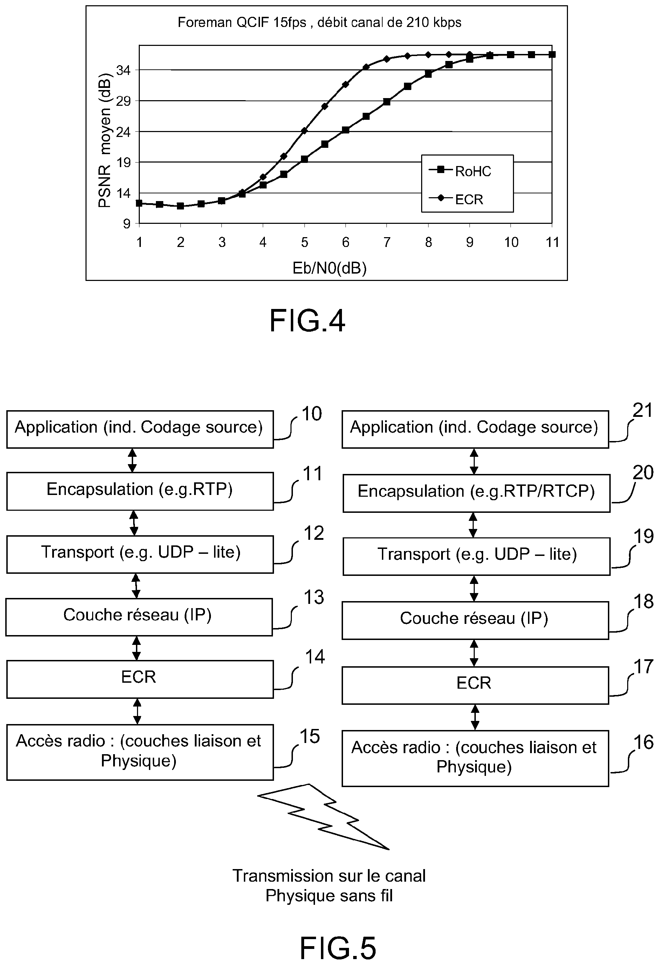

D'autres caractéristiques et avantages apparaîtront à la lecture de la description détaillée donnée à titre d'exemple et non limitative qui suit faite en regard de dessins annexés qui représentent :
∘ la figure 1, la protection de paquet ECR (en-tête compressé robuste),
∘ la figure 2, un exemple de chaîne de communication mettant en œuvre des modules ECR selon l'invention,
∘ les figures 3 et 4, des courbes de gain en terme de débit utilisé et de rendu final au niveau applicatif, et
∘ la figure 5, présente les étapes typiques de la transmission de données multimédia sur un réseau sans fil au travers des couches application, session, transport, réseau, liaison, et physique.

Afin de mieux faire comprendre le procédé selon l'invention, la description qui suit est donnée dans le cadre d'une application de protection des en-têtes IP, en particulier lorsqu'ils ont été compressés, par exemple au moyen du standard ROHC (Robust Header Compression) normalisé par le comité IETF dans les RFC 3095 et afférentes.

L'idée consiste notamment à appliquer à un en-tête compressé considéré un mécanisme de protection par application d'un code correcteur d'erreurs, afin de protéger l'en-tête du paquet. En effet, la perte de l'en-tête entraîne généralement la perte du paquet. Or, dans l'exemple donné, la réception des données sources (c'est-à-dire les données utiles au niveau applicatif) même partiellement corrompues au niveau transport ou applicatif est préférable à une perte des paquets correspondants. Il s'agit typiquement des transmissions pour lesquelles des mécanismes de protection, de correction ou de masquage ont pu être mis en place au niveau applicatif ou transport, comme par exemple, des transmissions audio ou vidéo : dans ce cas, l'élimination d'un paquet dans la pile protocolaire (par exemple au niveau liaison ou réseau) du fait de la corruption de son en-tête est dommageable. La figure 1 schématise les étapes permettant le changement du contenu ou du format du paquet de données à transmettre en appliquant les procédés selon l'invention.

Le procédé met en œuvre par exemple les étapes suivantes :
- Etape 1 : récupérer le paquet réseau de la couche IP, 1, et identifier la partie en-tête compressé, 2, de la partie données sources ; d'un point de vue réseau, la charge utile = les données à transmettre du point de vue de la couche considérée, donc notamment les données sources, mais aussi les en-têtes des couches au-dessus.
- Etape 2 : appliquer un codage correcteur sélectionné, qu'il s'agisse d'un code par défaut ou d'un code sélectionné en fonction des informations disponibles sur l'état de la liaison de transmission considérée, et fournir le nouveau paquet réseau résultant 4 à la couche liaison, avec identification des informations de codage d'erreur ECR (en-tête compressé robuste) : mode de protection utilisé, et le cas échéant la longueur de l'en-tête compressé protégé.
- Etape 3 : générer l'en-tête liaison selon le standard de transmission considéré intégrant les informations ECR (mode de protection utilisé, et le cas échéant la longueur de l'en-tête compressé protégé), et adaptation de la somme de contrôle (CRC) de la couche liaison.

Le mécanisme ECR (en-tête compressé robuste) s'applique naturellement également dans le cas où l'en-tête n'est en fait pas compressé, ce qui est par exemple le cas avec l'emploi du mode non compressé « UNCOMPRESSED » du protocole ROHC, sachant qu'il se révèle alors plus coûteux à mettre en pratique puisque la partie du paquet de données à protéger est plus conséquente.

Le mécanisme ECR peut être directement intégré à l'application du mécanisme classique de compression d'en-tête, ce qui simplifie la transmission de l'identification de la partie en-tête compressée de la partie données utiles au module ECR dans la première étape.

Le mécanisme ECR peut aussi être étendu à la protection de tout ou partie des données utiles, en adaptant le mécanisme de codage correcteur d'erreur pour le faire porter sur tout ou partie des données utiles, ce qui impliquera la nécessité d'ajouter également les informations correspondantes ECR dans l'en-tête liaison. En pratique, ceci sera intéressant uniquement si les en-têtes sont mieux protégés que la partie données utiles.

Les données à transmettre sont par exemple de type multimédia.

La figure 2 montre un exemple de chaîne de communication mettant en œuvre des modules ECR, qui sont positionnés en pratique sous la couche réseau (IP) à la place (ou à l'intérieur) des modules classiques de compression d'en-tête de type ROHC. Au niveau de l'émetteur 1, les données ECR sont soit connues, soit introduites par un module ECR 2 selon des modes décrits ci-après. Au niveau du récepteur 3, soit le récepteur connaît les paramètres utilisés pour la correction d'éventuelles erreurs, soit il comporte un module ECR 4 adapté à trouver ces paramètres (mode de protection utilisé, et le cas échéant longueur de l'en-tête compressé protégé). Les données sont transmises par un lien sans fil 5.

La mise en œuvre de l'ECR, qui s'appuie sur les trois étapes explicitées précédemment est illustrée ci-après dans le cas de l'application sur un accès radio de type 802.11.

En pratique, le standard 802.11 [1] définit le format des trames échangées comme suit :

**Tableau 1**

| FC (2) | D/ID (2) | Adresse 1 (6 octets) | Adresse 2 (6 octets) | Adresse 3 (6 octets) | SC (2) | Adresse 4 (6 octets) |
|---|---|---|---|---|---|---|
| | | | Corps de la trame (0 à 2312 octets) | | | |
| | | | | | | FCS(4) |

| | | | | | | |
|---|---|---|---|---|---|---|
| Avec : FC : contrôle de trame (frame control) D/ID : Durée / Identificateur (ID) SC : contrôle de séquence (sequence control) FCS : somme de contrôle d'intégrité dit aussi CRC (frame check sequence) où l'on trouve pour chaque trame un en-tête (dit MAC header pour en-tête médium access), un corps de trame (de longueur variable, véhiculant les en-têtes des couches protocolaires supérieures et les données utiles du paquet), et un champ de contrôle (dit FCS pour Frame Sequence Check) permettant la détection d'erreur. | | | | | | |

Plus précisément, l'en-tête se découpe notamment selon les champs suivants :
▪ Champ de contrôle de trame (dit FC pour Frame Control), sur deux octets, qui se décompose comme suit :

**Tableau 2**

| | | | | | | | |
|---|---|---|---|---|---|---|---|
| Version de protocole (2 bits) | | Type (2 bits) | | Sous-Type (4 bits) | | | |
| de DS (1 bit) | vers DS (1 bit) | Plus de Frag (1 bit) | Retry (1 bit) | Puissance Mgt (1 bit) | Plus de données (1 bit) | WEP (1 bit) | ordre (1 bit) |

| | | | | | | | |
|---|---|---|---|---|---|---|---|
| Avec : DS : distribution service Frag : fragments Retry : retransmission WEP : mode de chiffrement WEP (Wired Equivalent Privacy) où sont en particulier indiqués le «type» et le « sous-type » de la trame considérée, les champs qui permettent de séparer les types *gestion* (correspondant aux demandes d'association et aux messages d'annonce du point d'accès), *contrôle* (qui identifie les demandes d'autorisation d'accès au média pour émettre du trafic) et *données* (qui correspond aux trames de données). Le sous-type permet de distinguer parmi les différents types la nature exacte de la trame considérée : | | | | | | | |

▪ corps de la trame, qui contient la charge utile pour la couche liaison, c'est-à-dire le paquet IP complet (en-tête, compressé ou non et données source),
▪ champs somme de contrôle (également appelée CRC pour Cyclic Redundancy check) qui permet de détecter les erreurs par contrôle de l'intégrité du bloc de données sur lequel il porte.

La solution ECR selon l'invention correspondant à introduire du codage correcteur d'erreur sur l'en-tête IP compressé, mais aussi à laisser transiter des paquets dont les données utiles peuvent être corrompues, il est nécessaire de réduire la portée du champ somme de contrôle et de ne le faire porter que sur l'en-tête, et non plus sur l'en-tête et le corps de la trame comme il est fait classiquement.

Un exemple de définition de nouveaux sous-types, parmi les valeurs réservées, pour identifier les flux ECR (et éventuellement le flux ROHC) est donné dans le tableau 3 suivant :

**Tableau 3**

| **Valeur type** | **Description** | **Valeur sous-type** | **Description sous-type** |
|---|---|---|---|
| 10 | données (Data) | 0000 | Données |
| 10 | données (Data) | 0001 | Données + CF-Ack |
| 10 | données (Data) | 0010 | Données + CF-Poll |
| 10 | données (Data) | 0011 | Données + CF-Ack + CF-Poll |
| 10 | données (Data) | 0100 | Null |
| 10 | données (Data) | 0110 | CF-Poll (pas de données) |
| 10 | données (Data) | 0111 | CF-Ack + CF-Poll (pas de données) |
| 10 | données (Data) | 1000 | ROHC Données |
| 10 | données (Data) | 1001 | ECR Données mode 1 |
| 10 | données (Data) | 1010 | ECR Données mode 2 |
| 10 | données (Data) | 1011 | ECR Données mode 3 |
| 10 | données (Data) | 1100-1111 | réservé (Reserved) |
| 11 | données (Data) | 0000 - 1111 | réservé (Reserved) |

Les valeurs utilisées dans cet exemple pour la protection ECR selon l'invention sont 1001 pour le mode 1, 1010 pour le mode 2 et 1011 pour le mode 3.

A titre illustratif, trois cas peuvent être proposés pour véhiculer les trames de données ECR :
∘ le « mode 1 », le plus simple, correspond à un type entièrement prédéfini, par exemple en fonction de l'application, pour lesquels les paramètres ECR ne sont pas fournis par la trame, car ils sont supposés connus de l'émetteur et du récepteur. Dans ce cas, le champ de contrôle de trame est inchangé par rapport à la norme, et seule la portée du champ somme de contrôle doit être modifiée, pour porter sur l'en-tête uniquement (30 octets dans l'exemple considéré),
∘ le « mode 2 » permet l'introduction d'informations ECR dans les valeurs utilisées pour identifier un flux de données. Ces informations ne sont donc plus prédéfinies, et peuvent donc soit varier au cours du temps, par exemple en fonction de l'état de la liaison, soit, être simplement redéfinies par l'émetteur pour chaque nouvelle transmission. Dans ce mode, on propose donc d'étendre le champ FC d'un octet ou deux octets dédiés à l'identification du code considéré pour la protection ECR et à l'information de taille de l'en-tête initiale compressée. En pratique, l'index de code considéré sera ainsi donné sur deux à huit bits faisant référence à une table pré-définie connue de l'émetteur et du récepteur et contenant les informations nécessaires aux opérations de codage et décodage correcteur d'erreurs (type de code, polynôme(s) générateur(s), rendement, ...). L'information de taille de l'en-tête initiale compressé ℓ sera codée sur six à huit bits, la valeur transmise étant en pratique soit la taille elle-même soit étant inférée de la taille par une règle simple : ainsi, dans le cas d'une compression d'en-tête RTP/UDP(-Lite)/IPv6, la taille de l'en-tête compressé ROHC peut atteindre une longueur ℓ=65 octets, ce qui permet de coder ℓ-1 sur 6 bits seulement. Le nouveau champ FC résultant est illustré ci-dessous. Dans ce cas, la portée du champ somme de contrôle est là aussi modifiée, sur la nouvelle en-tête uniquement (de taille 31 ou 32 octets dans ce cas pour l'exemple considéré).

**Tableau 4**

| Version de protocole (2 bits) | | Type (2 bits) | | Sous-Type (4 bits) | | | |
|---|---|---|---|---|---|---|---|
| To DS (1 bit) | From DS (1 bit) | More Frag (1 bit) | Retry (1 bit) | Power Mgt (1 bit) | More Data (1 bit) | WEP (1 bit) | Order (1 bit) |
| Code considéré (2 bits) | | | Longueur de l'en-tête (6 bits) | | | | |
| Code considéré (8 bits) | | | | | | | |
| Longueur de l'en-tête (8 bits) | | | | | | | |

o le « mode 3 » se rapproche du mode 2 au sens où il permet lui aussi l'introduction d'informations ECR, qui sont dans ce cas limitées au code considéré, l'information de longueur de l'en-tête compressée à laquelle la protection a été appliquée étant déduite de l'en-tête compressée elle-même. En pratique, ceci suppose donc un décodage de l'en-tête ECR en deux étapes :
∘ une première étape de décodage du début de l'en-tête ECR, permettant l'extraction de l'information de taille de l'en-tête compressée initiale, et donc la déduction de la taille de l'en-tête en fonction du code qui a été appliqué,
∘ une seconde étape de décodage du reste de l'en-tête ECR à partir de l'information de taille de l'en-tête précédemment déterminée. Une valeur maximale peut être définie pour borner l'information de taille de l'en-tête déduite par décodage, ceci afin d'éviter la prise en compte d'une information erronée (dans le cas d'un échec de la première étape de décodage).

**Tableau 5**

| Version de protocole (2 bits) | | Type (2 bits) | | Sous-Type (4 bits) | | | |
|---|---|---|---|---|---|---|---|
| To DS (1 bit) | From DS (1 bit) | More Frag (1 bit) | Retry (1 bit) | Power Mgt (1 bit) | More Data (1 bit) | WEP (1 bit) | Order (1 bit) |
| Code considéré (8 bits) | | | | | | | |

Les extensions proposées sont données à titre d'exemple, et le mécanisme reste le même si l'on choisissait une répartition différente des bits d'extension entre code considéré et longueur d'en-tête.

Les figures 3 et 4 permettent d'illustrer le gain obtenu en application du procédé selon l'invention. Les tests ont été réalisés dans le cadre d'une transmission vidéo H.264/AVC, avec comme codeur une version rendue robuste aux plantages logiciels (« crash » en anglo-saxon) du logiciel de référence JM 10.1 [3] du standard. En pratique, c'est la séquence de référence 'Foreman' de l'ITU-T, utilisée au format Qcif, 15 Hz qui a été employée, en mode multi-slices c'est-à-dire avec découpage possible de chaque image en plusieurs tranches ou sous-images avec une taille maximale de paquets NAL (Network Abstraction Layer) de 192 octets et des groupes de 15 images (I₁ P₁₄). Afin de pallier la forte sensibilité aux erreurs du codeur source, ces données sources ont été protégée au niveau applicatif par l'application d'un code correcteur d'erreur convolutif (code convolutif poinçonné à rendement compatible (RCPC) de code mère rendement 1/3 et de mémoire 6 défini dans [2]. Deux cas sont présentés, correspondant à un débit sans codage correcteur de 164 kbps en mode ROHC et 155 kbps en mode ECR pour obtenir un débit transmis sur le canal identique de 328 kbps dans le premier cas (figure 3) et 210 kbps dans le second cas (figure 4). Chaque NAL codée a ensuite été encapsulée séparément dans une trame RTP (protocole transport temps réel Real Time Protocol) selon les recommandations de la RFC IETF 3984, puis transmise à une pile protocolaire standard UDP-Lite/IPv6 avant envoi soit vers un module de compression ROHC classique, soit vers le module ECR de compression puis protection selon l'invention. Dans les deux cas, les paramètres de compression ROHC employés ont été : L=2, FO_TlMEOUT=50, IR_TIMEOUT=1000. Le mode ECR a été employé en 'mode 1' avec emploi du codeur RCPC susmentionné, utilisé au rendement mère 1/3.
Les données ont ensuite été transmises sur un pseudo-lien radio, simulé par l'ajout d'un bruit additif blanc gaussien dont le rapport signal à bruit E_{b}/N₀ est l'abscisse des courbes présentées.

La figure 5 présente les étapes typiques de la transmission de données multimédia sur un réseau sans fil au travers des couches application, session, transport, réseau, liaison et physique.
Sur la partie gauche de la figure 5, une application incluant le codage source 10, transmet les données à une étape d'encapsulation 11. Les données encapsulées sont ensuite transmises par la couche transport 12 à une couche réseau 13. La couche réseau transmet les données à une étape de compression ECR 14, selon le procédé décrit en relation aux figures précédentes. Les données avec en-têtes compressés sont transmises à la couche accès radio 15 comprenant les couches liaison et physique. Cette dernière couche accès radio va transmettre les données ayant un en-tête compressé vers un récepteur (partie droite de la figure). Ce récepteur reçoit les données au niveau de sa couche accès radio 16, puis les transmet à une étape de décompression d'en-tête selon l'invention, 17. Les données avec en-tête décompressés sont ensuite transmises vers la couche réseau IP 18, puis vers la couche de transport 19. Les données sont ensuite désencapsulées (étape 20) avant d'être transmises à la couche applicative 21.

L'invention permet notamment d'améliorer la transmission des paquets de type en-tête avant transmission sur un réseau sans fil.
Elle n'oblige pas à modifier la solution accès radio retenue qu'au niveau de l'en-tête, insertion des informations ECR, modification de la somme de contrôle, ce qui peut être autorisé dans le cadre d'un standard, et qu'elle est moins coûteuse en terme de débit utilisé que de la retransmission.
En s'insérant dans l'en-tête liaison, la solution sera clairement identifiée, ce qui pourra permettre à un récepteur n'implémentant pas l'invention de détecter les trames qui l'emploient et de les rejeter non pertinentes, sans remonter aux couches supérieures des données erronées.
En modifiant la portée de la somme de contrôle pour la faire porter uniquement sur l'en-tête liaison, on évite la perte de la trame pour une charge utile erronée, tout en assurant que l'en-tête liaison est correcte (validée par sa somme de contrôle), et que l'en-tête du paquet réseau est protégé (par le code correcteur d'erreur et éventuellement la somme de contrôle du mécanisme de compression d'en-tête).
Ainsi, on évite le recours systématique à de l'ARQ ou du FEC sur tout le paquet, et on gagne en débit, et on peut appliquer la solution sur des liens mono et bi-directionnels.

### Références

[1] M. Gast, 802.11 wireless networks, the definitive guide. Ed. O'Reilly.
[2] J. Hagenauer, "Rate-compatible punctured convolutional codes and their application," in IEEE Trans. on Communications, vol. 36, n. 4, pp. 389-400, April 1988.
[3] Joint verification model for H.264 (JM 10.1), ttp://iphome.hhi.de/suehring/tml, July 2006.

## Revendications

1. Procédé de transmission de données dans un système de transmission, les données étant transmises sous la forme de paquets comprenant au moins un champ en-tête compressé et un champ de données et selon le standard RoHC **caractérisé en ce qu'**il comporte au moins les étapes suivantes :
- récupérer le paquet de données à transmettre qui comprend un en-tête compressé et des données utiles, l'entête compressé comprenant un champ permettant de déduire la taille de l'entête compressé,
- identifier la partie en-tête de la partie données utiles,
- appliquer un codage correcteur sélectionné sur l'intégralité de l'en-tête, et fournir le nouveau paquet résultant à la couche liaison, en communiquant aussi le code correcteur utilisé mais sans communiquer la taille de l'en-tête compressé,
- générer l'en-tête liaison selon le format de transmission du système de transmission considéré intégrant dans le début de l'en-tête le code correcteur utilisé, et l'adaptation de la somme de contrôle CRC de la couche liaison,
- en réception, effectuer le décodage correcteur d'erreur adapté audit codage correcteur en deux étapes :
∘ Une première étape de décodage sur le début de l'en-tête compressé ECR, permettant de déduire l'information de taille de l'en-tête compressé initial en fonction du code correcteur qui a été appliqué,
∘ Une seconde étape de décodage du reste de l'en-tête à partir de l'information de taille précédemment déterminée.

2. Procédé selon la revendication 1, **caractérisé en ce que** la transmission des données utilise le standard IEEE 802.11 et **en ce que** le codage correcteur d'erreur est introduit sur l'en-tête IP compressée.

3. Procédé selon les revendications 1, ou 2, **caractérisé en ce que** les paramètres du codage correcteur d'erreur sont supposés connus de l'émetteur et du récepteur et les paramètres sont fournis par un processus externe à la trame de données.

4. Procédé selon l'une des revendications précédentes, **caractérisé en ce que** les données à transmettre sont des données multimédia.

5. Procédé selon l'une des revendications précédentes, **caractérisé en ce que** le système est un système de transmission vidéo H.264.

6. Système de transmission de données comportant un émetteur et un récepteur décodeur **caractérisé en ce que** ledit émetteur comporte des moyens pour exécuter au moins les étapes du procédé selon l'une des revendications 1 à 5.

## Patentansprüche

1. Verfahren zum Übertragen von Daten in einem Übertragungssystem, wobei die Daten in der Form von Paketen, welche mindestens ein komprimiertes Header-Feld und ein Datenfeld umfassen, und entsprechend dem RoHC-Standard übertragen werden, **dadurch gekennzeichnet, dass** es mindestens die folgenden Schritte umfasst:
- Abgreifen des zu übertragenden Datenpaketes, welches einen komprimierten Header und Nutzdaten umfasst, wobei der komprimierte Header ein Feld umfasst, welches es ermöglicht, die Größe des komprimierten Headers abzuleiten,
- Identifizieren des Header- Abschnitts des Nutzdaten-Abschnitts,
- Anwenden einer ausgewählten Korrekturcodierung auf den gesamten Header, und Bereitstellen des resultierenden neuen Paketes an die Verbindungsschicht, wobei ebenfalls der verwendete Korrekturcode kommuniziert wird, jedoch ohne die Größe des komprimierten Headers zu kommunizieren,
- Erzeugen des Verbindung-Headers gemäß dem Übertragungsformat des betrachteten Übertragungssystems, welcher im Beginn des Headers den verwendeten Korrekturcode und die Anpassung der Prüfsumme CRC der Verbindungsschicht beinhaltet,
- im Empfang, Durchführen der an die Korrekturcodierung angepasste Fehlerkorrektur-Dekodierung in zwei Schritten:
∘ einem ersten Schritt des Decodierens, am Anfang des komprimierten Headers ECR, der es ermöglicht, die Information zur Größe des anfänglichen komprimierten Headers angesichts des angewandten Korrekturcodes abzuleiten
∘ einem zweiten Schritt des Decodierens des Rests des Headers aus der Information zur Größe, welche zuvor bestimmt wurde.

2. Verfahren nach Anspruch 1, **dadurch gekennzeichnet, dass** die Datenübertragung den Standard IEEE 802.11 verwendet und dass die Fehlerkorrekturcodierung in den komprimierten IP-Header eingebracht wird.

3. Verfahren nach einem der Ansprüche 1 oder 2, **dadurch gekennzeichnet, dass** die Parameter der Fehlerkorrekturcodierung vom Sender und von Empfänger als bekannt vorausgesetzt sind, und die Parameter dem Datenrahmen durch einen externen Prozess bereitgestellt werden.

4. Verfahren nach einem der vorhergehenden Ansprüche, **dadurch gekennzeichnet, dass** die zu übertragenden Daten Multimediadaten sind:

5. Verfahren nach einem der vorhergehenden Ansprüche, **dadurch gekennzeichnet, dass** das System ein H.264-Videoübertragungssystem ist.

6. Datenübertragungssystem, welches einen Sender und einen Empfänger-Decoder umfasst, **dadurch gekennzeichnet, dass** der Sender Mittel zum Ausführen von mindestens den Schritten des Verfahrens nach einem der Ansprüche 1 bis 5 umfasst.

## Claims

1. A method for transmitting data in a transmission system, the data being transmitted in the form of packets comprising at least one compressed header field and one data field and according to the RoHC standard, **characterized in that** it comprises at least the following steps :
- recovering the data packet to be transmitted which comprises a compressed header and useful data, the compressed header comprising a field which allows to deduct the size of the compressed header,
- identifying the header part from the useful-data part,
- applying a selected corrector coding on the entire header, and providing the resulting new packet to the link layer, while also communicating the corrector code used, but without communicating the size of the compressed header,
- generating the link header according to the transmission format of the considered transmission system integrating on the start of the header the corrector code used, and the adaptation of the CRC checksum of the link layer,
- on reception, performing the error corrector decoding adapted to said corrector coding in two steps:
∘ a first step of decoding on the start of the RCH compressed header, allowing to deduce the information regarding the size of the initial compressed header, in function of the applied corrector code,
∘ a second step of decoding the remainder of the header on the basis of the previously determined size information.

2. The method of claim 1, **characterized in that** the transmission of the data uses the IEEE 802.11 standard and **in that** the error corrector coding is introduced on the compressed IP header.

3. The method of claims 1 or 2, **characterized in that** the parameters of the error corrector coding are assumed to be known to the sender and to the receiver and the parameters are provided by an external process to the data frame.

4. The method according to any one of the preceding claims, **characterized in that** the data to be transmitted are multimedia data.

5. The method according to any one of the preceding claims, **characterized in that** the system is an H.264 video transmission system.

6. Data transmitting system comprising a transmitter and a receiver-decoder, **characterized in that** the transmitter comprises means for implementing at least the steps of the method according to one of the claims 1 to 5.
